# EUROPÄISCHE PATENTSCHRIFT

(11) **EP 3 242 036 B1**
(45) Veröffentlichungstag und Bekanntmachung des Hinweises auf die Patenterteilung: **28.10.2020**
(21) Anmeldenummer: 16207452.0
(22) Anmeldetag: 30.12.2016
(51) Int. Cl.: F04D 15/00, F04D 27/00, F04D 29/66

(54) **VERFAHREN ZUM ERFASSEN EINES ZUSTANDES EINES PUMPENAGGREGATS**
METHOD FOR DETECTING A CONDITION OF A PUMP UNIT
PROCÉDÉ DE DÉTECTION D'UN ÉTAT D'UN GROUPE MOTOPOMPE

(43) Veröffentlichungstag der Anmeldung: 08.11.2017
(73) Patentinhaber: Grundfos Holding A/S, 8850 Bjerringbro (DK)
(72) Erfinder: Helbo Nygaard, Michael, 8600 Viborg (DK)
(74) Vertreter: Patentanwälte Vollmann Hemmer Lindfeld Partnerschaft mbB

(56) Entgegenhaltungen:
- WO-A1-2014/026787
- WO-A1-2016/059112
- WO-A1-2017/070629
- JP-A- 2006 194 656
- JP-A- 2014 016 199
- US-B1- 8 292 501
- KI-SUNG SON ET AL: "Vibration displacement measurement technology for cylindrical structures using camera images", NUCLEAR ENGINEERING AND TECHNOLOGY, Bd. 47, Nr. 4, 27. März 2015 (2015-03-27), Seiten 488-499, XP055336049, ISSN: 1738-5733, DOI: 10.1016/j.net.2015.01.011

## Beschreibung

Die Erfindung betrifft ein Verfahren zum Erfassen eines Zustandes eines Pumpenaggregats.

Nicht nur in der Medizintechnik ist man bemüht, durch Vorsorge, auftretende Fehler möglichst frühzeitig zu erkennen um diese besser behandeln zu können. Entsprechendes gilt im Bereich der Maschinen, insbesondere der hier in Rede stehenden Pumpenaggregate. Während man früher eine Heizungsumwälzpumpe z. B. erst bei Defekt, d. h. bei Stillstand der Pumpe ausgetauscht hat, ist man heute bemüht, durch regelmäßige Überwachung den Zustand des Pumpenaggregates und damit auch mögliche Zustandsveränderungen zu erfassen um Teile des Pumpenaggregates oder das Pumpenaggregat selbst rechtzeitig zu erneuern, bevor ein Defekt zum Ausfall der Pumpe und damit meist der gesamten Anlage führt.

Aus WO 2016/059112 A1 zählt es zum Stand der Technik, den Zustand eines Pumpenaggregats, beispielsweise einer Heizungsumwälzpumpe akustisch zu erfassen. Zur Aufnahme kann ein übliches Smartphone verwendet werden, welches die akustischen Daten durch Signalverarbeitung aufbereitet und hinsichtlich auftretender Anomalien oder Fehlern untersucht. Mit dem bekannten Verfahren können beispielsweise Lagerschäden oder Kavitation innerhalb der Pumpe erfasst werden. Der Vorteil dieser akustischen Fehleranalyse während des Betriebs des Pumpenaggregats liegt darin, dass der Servicetechniker ohne besondere Sensorik oder einen aufwändigen Prüfaufbau das Pumpenaggregat während des laufenden Betriebs auf Fehler hin untersuchen kann.

Nachteilig bei diesem Verfahren ist allerdings, dass es in geräuschbelastender Umgebung nicht oder zumindest nicht mit der erforderlichen Zuverlässigkeit durchgeführt werden kann.

Aus JP 2006 194 656 A zählt es zum Stand der Technik, einen Teil einer rotierenden Maschine mittels eines Smartphones fotografisch zu erfassen und mittels digitaler Bildverarbeitung zu ermitteln, inwieweit Abweichungen von vorermittelten fotografischen Darstellungen sich ergeben und bei Überschreiten eines vorbestimmten zulässigen Wertes ein entsprechendes Signal zu erzeugen.

Ausgehend von diesem Stand der Technik liegt der Erfindung die Aufgabe zugrunde, ein optisches Verfahren zum Erfassen eines Zustandes eines Pumpenaggregates zu verbessern.

Diese Aufgabe wird gemäß der Erfindung durch das im Anspruch 1 aufgeführte Verfahren gelöst. Vorteilhafte Ausgestaltungen des erfindungsgemäßen Verfahrens ergeben sich aus den Unteransprüchen, der nachfolgenden Beschreibung und den Zeichnungen.

Das erfindungsgemäße Verfahren zum Erfassen eines Zustandes eines Pumpenaggregats oder eines Pumpenaggregatteils umfasst die beiden grundlegenden Verfahrensschritte, nämlich das Aufzeichnen einer Videosequenz von dem in Betrieb befindlichen Pumpenaggregat oder zumindest eines Teils davon und das nachfolgende Ermitteln des Zustandes des Pumpenaggregats oder des Teils davon anhand von Änderungen in Bildern der Videosequenz.

Grundgedanke der vorliegenden Erfindung ist es anstelle der bekannten akustischen Analyse oder zusätzlich zu dieser eine optische Analyse des Pumpenaggregats bzw. des interessierenden Teils davon durchzuführen. Auch bei dem erfindungsgemäßen Verfahren wird durch geeignete Signalaufbereitung einer Videosequenz, also einer Anzahl aufeinanderfolgender Einzelbilder festgestellt, wie sich das Pumpenaggregat oder der interessierende Teil davon an seiner Oberfläche bewegt/schwingt um anhand dieser Bewegungen Rückschlüsse auf den Zustand des Pumpenaggregats zu ziehen.

Das erfindungsgemäße Verfahren ist zur Zustandserfassung im Betrieb des Pumpenaggregats vorgesehen. Da es auf den Bildern einer Videosequenz basiert, kann sich dieses nur auf Oberflächenbereiche des Aggregats erstrecken, beispielsweise das Pumpengehäuse, das Motorgehäuse, den Motorstuhl, die Kupplung zwischen Motorwelle und Pumpenwelle oder dergleichen. Das erfindungsgemäße Verfahren ist grundsätzlich zur Zustandserfassung von allen nur denkbaren Pumpenaggregaten geeignet, besonders vorteilhaft anwendbar ist dies bei ein- oder mehrstufigen Kreiselpumpen, die von einem Elektromotor angetrieben werden, welcher drehzahlsteuerbar oder drehzahlgeregelt ist, also typischerweise einen Stromrichter/Frequenzumrichter zur Ansteuerung aufweist.

Unter Pumpenaggregat im Sinne der vorliegenden Erfindung ist eine Flüssigkeitspumpe, insbesondere eine ein- oder mehrstufige Kreiselpumpe zu verstehen, die von einem Motor, insbesondere einem Elektromotor angetrieben wird, wobei Motor und Pumpe entweder eine gemeinsame Welle oder durch eine Kupplung, ein Getriebe oder andere Antriebsverbindung miteinander verbunden sind. Ein Pumpenaggregat im Sinne der vorliegenden Erfindung kann auch durch eine Anzahl von beispielsweise parallel geschalteten Pumpenaggregaten gebildet sein, die durch eine gemeinsame übergeordnete Steuerung angesteuert werden, wie dies beispielsweise bei Booster-Pumpen der Fall ist.

Durch das Aufzeichnen einer Videosequenz von dem in Betrieb befindlichen Pumpenaggregat oder eines Teils davon werden Bewegungen der Oberfläche erfasst, welche Rückschlüsse auf die Zustände des Pumpenaggregats erlauben, insbesondere kritische Zustände, wie sie beim Verschleiß von Bauteilen und im Betrieb in resonanzkritischen Bereichen und dergleichen auftreten.

Als erfindungswesentliches Kriterium zur Charakterisierung des Zustandes ist gemäß der Erfindung vorgesehen, die Geschwindigkeiten von Veränderungen zwischen Pixeln oder Pixelgruppen aufeinanderfolgender Bilder der Videosequenz zu ermitteln und die Ermittlung des Zustandes des Pumpenaggregats anhand der ermittelten Geschwindigkeiten von Änderungen durchzuführen. Dabei werden typischerweise unmittelbar aufeinanderfolgende Bilder der Videosequenz ausgewertet, es können jedoch auch gezielt Einzelbilder oder gegebenenfalls auch Bildergruppen ausgelassen werden, was allerdings bei der zeitlichen Berechnung zu berücksichtigen ist. Es ist davon auszugehen, dass die zeitlichen Parameter der Videosequenz (Belichtungszeit jedes Bildes) sowie der zeitliche Abstand zwischen aufeinanderfolgen den Bildern bekannt sind. Es hat sich erstaunlicherweise gezeigt, dass die Geschwindigkeiten von Änderungen in Bildern der Videosequenz besonders aussagekräftig für den Zustand eines Pumpenaggregats ist.

Dabei werden die Änderungen in Bildern der Videosequenz vorteilhaft durch digitale Bildverarbeitung ermittelt, wie dies im Nachfolgenden noch im Einzelnen beschrieben wird.

Dabei ist es vorteilhaft, Pixel oder Pixelgruppen entsprechend ihrer ermittelten Geschwindigkeit von Änderungen zu gruppieren und gruppenweise räumlich zuzuordnen. Durch diese Zuordnung ist es möglich, in einem späteren landkartenähnlichen Bild anhand der ermittelten Geschwindigkeiten von Änderungen zu kennzeichnen und so letztlich darstellen zu können, welche Oberflächenbereiche des Pumpenaggregats besonders bewegungsintensiv sind und damit zu ermitteln wo die großen Schwingungsamplituden auftreten, woraus mittelbar oder unmittelbar Rückschlüsse auf Lager, Verschleiß und Beanspruchung des Pumpenaggregates möglich sind.

Es hat sich erstaunlicherweise gezeigt, dass anhand der Geschwindigkeit von Änderungen aufeinanderfolgender Bilder, welche ein Maß für die Schwingungen in entsprechenden Oberflächenbereichen des Pumpenaggregates ist, Werte oder Wertebereiche festgelegt werden können, welche einen bestimmten Zustand repräsentieren. Gemäß einer Weiterbildung der Erfindung ist es daher vorgesehen, ermittelte Geschwindigkeiten von Änderungen und deren räumliche Zuordnung anhand einer Datenbank mit in der Datenbank gespeicherten Werten zu vergleichen und anhand dieses Vergleichs den Zustand zu bestimmten. Dabei ist es vorteilhaft, wenn es sich um eine cloudbasierte Datenbank handelt, da diese Werte dann beispielsweise über das Internet weltweit für einen Vergleich und für die Zustandsbestimmung zur Verfügung stehen.

Dabei können für bestimmte Zustände oder Bereiche Grenzwerte festgelegt werden, sodass bei dem Vergleich ermittelt werden kann, ob und wo vorbestimmte Geschwindigkeitswerte überschritten werden. Diese können dann vorteilhaft auf einem Display angezeigt werden, damit der mit der Überprüfung des jeweiligen Pumpenaggregats vertraute Servicetechniker gleich sieht, wo diese kritischen Bereiche liegen und welche mechanischen oder elektronischen Abhilfemaßnahmen hierfür möglich sind.

Besonders praktikabel und ressourcenschonend wird das erfindungsgemäße Verfahren unter Verwendung eines mobilen Computers, typischerweise eines Smartphones oder eines Tabletcomputers angewendet, mit dem sowohl das Aufzeichnen der Videosequenz als auch das Übermitteln der aufgezeichneten Daten an einen Datenbankserver erfolgt. Smartphones und Tablets weisen heutzutage leistungsfähige Bilderfassungseinrichtungen auf, sowie Funkanbindung sei es WLAN oder Mobilfunk oder auch drahtgebunden um mit Netzwerken, insbesondere dem Internet zu kommunizieren. Sie weisen somit alle Voraussetzungen auf, um eine Übermittlung an einen Datenbankserver zu realisieren, welcher vorzugsweise cloudbasiert ist, damit dieser über einen mobilen Computer z. B. über das Internet von nahezu jedem Ort aus erreichbar ist. Dabei ist der mobile Computer zweckmäßigerweise mit einer für das erfindungsgemäße Verfahren ausgelegten Softwareapplikation versehen, welche zur Ausführung des Verfahrens auf dem Computer läuft und den Benutzer zu den einzelnen Verfahrensschritten leitet, die der Computer dann weitgehend selbsttätig ausführt. Das Display des mobilen Computers soll vorteilhaft zur Darstellung der Zustandsanzeige genutzt werden. Rechenoperationen zur Ermittlung des Zustandes können je nach Rechenleistung wahlweise auf dem mobilen Computer oder dem Datenbankserver oder beiden ablaufen.

Dies betrifft sowohl die Ermittlung der Geschwindigkeiten der Änderungen der Bilder der Videosequenz, als auch deren räumliche Zuordnung sowie deren datenbankbasierte Auswertung.

Besonders vorteilhaft ist es, wenn bei dem erfindungsgemäßen Verfahren vor oder während des Aufzeichnens der Videosequenz mindestens ein Bild des zu untersuchenden Pumpenaggregats oder zu analysierenden Bereiches dieses Pumpenaggregats aufgenommen und datenbankseitig zur Ermittlung des Pumpenaggregattyps verwendet wird, in dem ein Vergleich mit dankbankmäßig erfassten Bilddaten erfolgt. Ein solch automatisierter Vergleich hat den wesentlichen Vorteil, dass ohne Eingaben von Typbezeichnung, Seriennummer und dergleichen datenbankmäßig die relevanten Werte/Grenzwerte des jeweiligen Pumpenaggregattyps ermittelt und für den weiteren Verfahrensablauf bei der Zustandserfassung verwendet werden können.

Dabei ist es vorteilhaft, wenn alternativ oder zusätzlich vor dem Aufzeichnen der Videosequenz der Pumpenaggregattyp und/- oder ein zu analysierender Bereich des Pumpenaggregats mittels des mobilen Computers eingegeben wird. So kann beispielsweise vorgesehen sein, dass dann, wenn der Bildvergleich zu keinem oder keinem eindeutigen Ergebnis hinsichtlich des Pumpenaggregattyps führt, zusätzlich eine manuelle Eingabe des Pumpenaggregattyps erfolgen kann oder dann, wenn der Pumpenaggregattyp zwar datenbankseitig ermittelt werden konnte, durch entsprechende Eingabe einen bestimmten Bereich des Pumpenaggregates anzugeben, dessen Zustand analysiert werden soll. Insbesondere bei Pumpenaggregaten größerer Bauart, bei denen eine ein- oder mehrstufige Kreiselpumpe in einem Pumpengehäuse angeordnet ist, welches über eine Kupplung mit einem Elektromotor verbunden ist, ist es zweckmäßig zu kennzeichnen, welcher der drei Bereiche (Pumpe, Kupplung, Motor) untersucht werden soll. Dies gilt auch für Booster-Pumpen um zu kennzeichnen, welche der Einzelpumpenaggregate untersucht werden soll.

Dabei können gemäß einer vorteilhaften Weiterbildung des erfindungsgemäßen Verfahrens nach Feststellung des Pumpenaggregattyps und/oder des zu analysierenden Bereiches datenbankseitig die vorbestimmten Geschwindigkeiten und die in diesem Zusammenhang zweckmäßigen Frequenzfilter für die Bildverarbeitung ermittelt und für die weitere Signalverarbeitung sowie zur Bestimmung des Zustandes bereitgestellt werden.

Die digitale Bildverarbeitung der Videosequenz kann in jeder geeigneten Weise erfolgen, welche mit realisierbarem Rechenaufwand sei es auf dem mobilen Computer und/oder serverseitig die Zustandsermittlung ermöglicht. Besonders vorteilhaft hat sich allerdings eine digitale Bildverarbeitung der Bilder der Videosequenz gezeigt, bei der ein oder mehrere der folgenden Schritte erfolgt:

Es ist zweckmäßig, das die Videosequenz repräsentierte elektrische Signal zunächst in ein YUV-Signal umzuwandeln und dann im Weiteren das Luminanzsignal Y zur weiteren Analyse zu verwenden. Die YUV-Signalverarbeitung ist weit verbreitet, robust und technisch kostengünstig realisierbar. Dabei kann durch Verwendung des Luminanzsignals Y das Datenvolumen schon erheblich, d. h. um die Farbinformation vermindert, reduziert werden.

Um dann die Pixelmenge jedes einzelnen Bildes weiter zu reduzieren hat es sich als vorteilhaft erwiesen, die Gauss Pyramide oder die Gauss-Laplace Pyramide auf die zur Analyse verwendeten Einzelbilder anzuwenden. Mit Anwendung der Gauss Pyramide bzw. der Gauss-Laplace Pyramide kann das Datenvolumen mit vergleichsweise geringem Rechenaufwand erheblich reduziert werden. Durch Datenkompression werden hohe Frequenzen, die für die vorliegende Auswertung den geringsten Informationsanteil beinhalten, entfernt. Es versteht sich, dass dies auch mit anderen Verfahren beispielsweise FourierTransformation erfolgen könnte.

Gemäß dem erfindungsgemäßen Verfahren ist dann vorteilhaft eine Bandpassfilterung der Einzelbilder nach der Datenreduktion vorgesehen, die Videosequenz wird also vorteilhaft nach der Datenreduktion einer Bandpassfilterung zugeführt.

Vorteilhaft wird nämlich erst nach der Datenreduktion dieser Bilder/Signale der optische Fluss sowie die Bestimmung der Geschwindigkeit der Änderungen also des optischen Flusses zwischen aufeinanderfolgenden Bildern ermittelt. Dies kann vorteilhaft mittels der Lucas-Kanade-Methode erfolgen, auf die hier nur beispielhaft verwiesen wird. Auch diese Methode ist mit vergleichsweise geringem Rechenaufwand realisierbar und weitgehend unempfindlich gegenüber Rauschen und Bilddefekten.

Schließlich wird ein Bild des Pumpenaggregates oder des zu analysierende Bereichs des Pumpenaggregats entsprechend den ermittelten Geschwindigkeiten unter Berücksichtigung ihrer räumlichen Zuordnung erzeugt, welches vorteilhaft auf dem Display angezeigt wird aber auch serverseitig oder pumpenaggregatseitig abgespeichert sein kann. Dabei werden vorteilhaft die Bildbereiche, in denen die vorbestimmte Geschwindigkeit überschritten wird, besonders kenntlich gemacht, beispielsweise durch eine rote Hervorhebung des sonst nur in Grautönen dargestellten Bildes. Der Fachmann sieht dann unmittelbar, um welches Problem es sich bei den angezeigten Bildbereichen handelt, beispielsweise ob ein Wellenlager defekt ist oder wirkungsgradreduzierende Systemresonanzen vorliegen.

Auch wenn die vorgenannten Bildverarbeitungsverfahren äußerst robust sind, so ist es doch vorteilhaft, die Videosequenz vor der Bildverarbeitung hinsichtlich der räumlichen Übereinstimmung ihrer Bilder zu untersuchen um bei mangelnder Übereinstimmung ein Signal zur Wiederholung der Aufnahme der Videosequenz auf dem mobilen Computer abzugeben. So kann es zweckmäßig sein, zur Aufnahme der Videosequenz ein Stativ zu verwenden. Auch ist es vorteilhaft, eine optische und/oder elektronische Bildstabilisierung einzusetzen, um bei ungünstiger Beleuchtung ein Verwackeln der Bilder auszuschließen. Auch kann es zweckmäßig sein, die Videosequenz mit einer zusätzlichen Beleuchtung aufzunehmen, wie sie bei modernen Smartphones heutzutage vorhanden ist. Der Informationsgehalt der Videosequenz ist umso höher, je höher dessen Bildfrequenz ist, d. h. je mehr Bilder pro Sekunde gemacht werden. Mit zunehmender Bildzahl verkürzt sich jedoch die Aufnahmezeit, und damit die Lichtmenge, welche auf den Chip gelangt. Eine zusätzliche Beleuchtung beim Aufnehmen der Videosequenz wird also hinsichtlich des Informationsgehaltes der Videosequenz stets einen positiven Effekt haben.

Gemäß einer vorteilhaften Weiterbildung des erfindungsgemäßen Verfahrens wird nach erfolgter Zustandserfassung und Ermittlung mindestens eines Bereichs, in dem die vorbestimmte Geschwindigkeit der Änderung überschritten wird, ein datenbankgestütztes Signal zu einer geänderten Einstellung des Pumpenaggregates und/oder zum Ersatz von Bauteilen abgegeben. Es versteht sich, dass in diesem Fall die Datenbank nicht nur die Grenzwerte für die Geschwindigkeit umfassen muss sondern auch konkrete Geschwindigkeitsmuster, welche mit Fehlern, seien es Lagerfehler oder Einstellfehler, korreliert sind, sodass praktisch eine Fehleranalyse erfolgen kann mit dem Hinweis, welche Einstellungen zu ändern sind bzw. welche Bauteile zu ersetzen sind. So kann beispielsweise ein Resonanzfehler dadurch vermindert werden, dass das Pumpenaggregat in diesem Resonanzbereich nicht mehr betrieben wird, das heißt, die Drehzahl geändert wird.

Vorteilhaft wird während der Aufnahme der Videosequenz nicht nur eine Bildfolge sondern auch der Ton aufgenommen und zusätzlich eine Ermittlung des Zustandes des Pumpenaggregates durch Auswertung der Tonsequenz erzeugt. Es wird in diesem Zusammenhang auf WO 2016/059112 A1 verwiesen, in der dies im Einzelnen beschrieben ist. Es versteht sich, dass in diesem Zusammenhang Video- und Tonaufnahme nicht notwendigerweise gleichzeitig erfolgen müssen. Insbesondere bei frequenzselektiven Aufnahmen wie sie in der vorgenannten Druckschrift beschrieben sind, kann es dann auch erforderlich sein, nachfolgend mehrere Tonaufnahmen des in Betrieb befindlichen Pumpenaggregats zu tätigen. Insbesondere bei Einsatz eines Smartphones oder Tablets kann eine solche zusätzliche Tonauswertung praktisch ohne zusätzlichen technischen Aufwand erfolgen.

Vorteilhaft wird das erfindungsgemäße Verfahren in zeitlichen Abständen wiederholt, wobei die jeweils ermittelten Geschwindigkeitswerte gespeichert werden, sodass nicht nur der absolute Zustand des Pumpenaggregats anhand der aktuellen Ermittlung sondern auch die Zustandsänderung über die Zeit erfasst werden.

Das erfindungsgemäße Verfahren kann vorteilhaft applikationsgesteuert unter Einsatz der in einem Smartphone integrierten digitalen Kamera ausgeführt werden, beschränkt sich jedoch nicht hierauf. Je höher die Aufnahmefrequenz ist, desto weiter geht auch die Zustandsermittlung. Bei einer Videosequenz mit 240 Bildern pro Sekunde können Vibrationen bis zu 120 Hz erfasst und analysiert werden. Dies entspricht einem Drehzahlbereich von bis zu 7.200 Umdrehungen pro Minute. In diesem Bereich können nahezu alle üblicherweise auftretenden Fehler analysiert werden.

Die Erfindung ist nachfolgend anhand eines Ausführungsbeispiels näher erläutert, es zeigen
- Fig. 1: in stark schematisierter Darstellung die Anwendung des erfindungsgemäßen Verfahrens mittels eines Smartphones an einer Booster-Pumpe,
- Fig. 2: in stark vereinfachter perspektivischer Seitenansicht eine mehrstufige Inline-Kreiselpumpe mit angeflanschtem Antriebsmotor aufgeteilt in vier Bereiche,
- Fig. 3: ein Bild einer Videosequenz eines ausgewählten Bereiches,
- Fig. 4: eine entsprechend den Geschwindigkeitsänderungen anhand der Videosequenz bestimmte Karte der Geschwindigkeitsverteilung,
- Fig. 5: eine unter Berücksichtigung der vorbestimmten Werte und der räumlichen Zuordnung nach Abschluss des Verfahrens auf dem Display ersichtliches Bild; und
- Fig. 6: ein Ablaufdiagramm betreffend das Verfahren zur Zustandsermittlung.

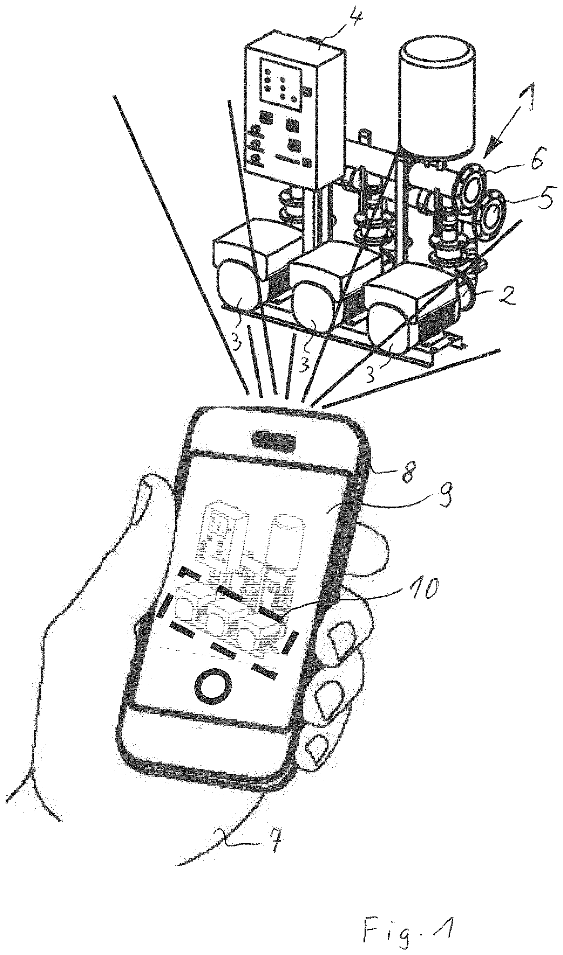

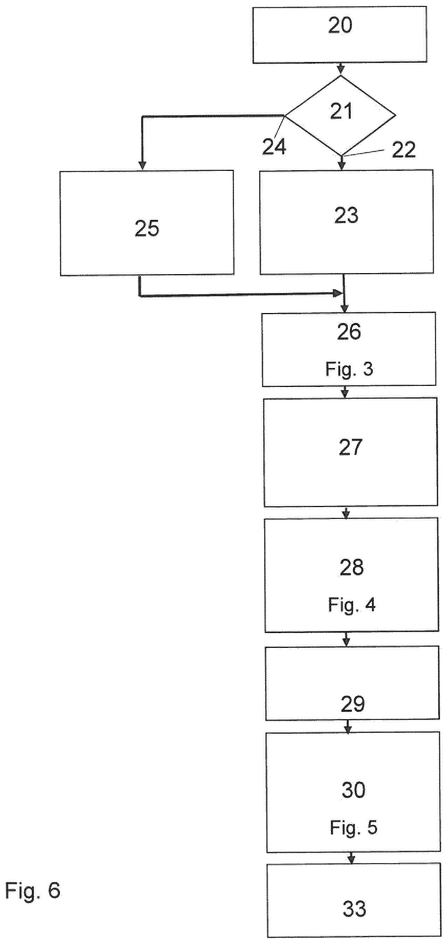

Das erfindungsgemäße Verfahren ist beispielhaft im Folgenden erläutert, wobei die Verfahrensschritte in dem Ablaufdiagramm gemäß Figur 6 im Einzelnen aufgeführt sind. Anhand von Figur 1 ist dargestellt, wie das erfindungsgemäße Verfahren beispielhaft durchgeführt werden kann. Ein zu untersuchendes Pumpenaggregat 1, in der dargestellten Ausführungsform eine Booster-Pumpe besteht aus drei parallel geschalteten Kreiselpumpen 2, die jeweils von einem frequenzumrichtergesteuerten Elektromotor 3 angetrieben werden. Eine übergeordnete Steuerung 4 schaltet die aus einer gemeinsamen Saugleitung 5 in eine Druckleitung 6 fördernden Kreiselpumpen 2 bedarfsweise zu oder ab.

Um den Zustand dieses aus drei Einzelaggregaten bestehenden Pumpenaggregats 1 zu bestimmen, betätigt eine Bedienperson 7, von der in Figur 1 nur die Hand dargestellt ist, ein Smartphone 8, auf dem zunächst eine für diesen Zweck bestimmte Softwareapplikation gestartet wird, in welcher die Bedienperson 7 als erstes aufgefordert wird, mittels des Smartphones 8 ein Bild des Pumpenaggregats 1 zu machen. Dieses wird mittels der Funkanbindung des Smartphones (WLAN, Bluetooth, Mobilfunk 3G, 4G, 5G etc.) mit einer cloudbasierten Datenbank eines Servers verbunden, welcher das übermittelte Bild des Pumpenaggregats 1 anhand einer Bilddatenbank analysiert, identifiziert und dann zum Markieren eines zu untersuchenden Teils des Pumpenaggregats 1 auffordert, der in Figur 1 durch die auf dem Display 9 des Smartphones 8 markierten Elektromotoren 3 gebildet ist. Dieser ausgewählte Bereich 10 wird nun zur weiteren Zustandsermittlung betrachtet, wobei zunächst eine Videosequenz von diesem Bereich des Pumpenaggregats 1 mittels des Smartphones 8 aufgenommen und zur Weiterverarbeitung über das cloudbasierte Netzwerk an den Server weitergeleitet wird, der unter Zugriff auf die in der Datenbank abgespeicherten Daten die übermittelte Videosequenz aufbereitet, analysiert und das Ergebnis auf dem Display 9 anzeigt.

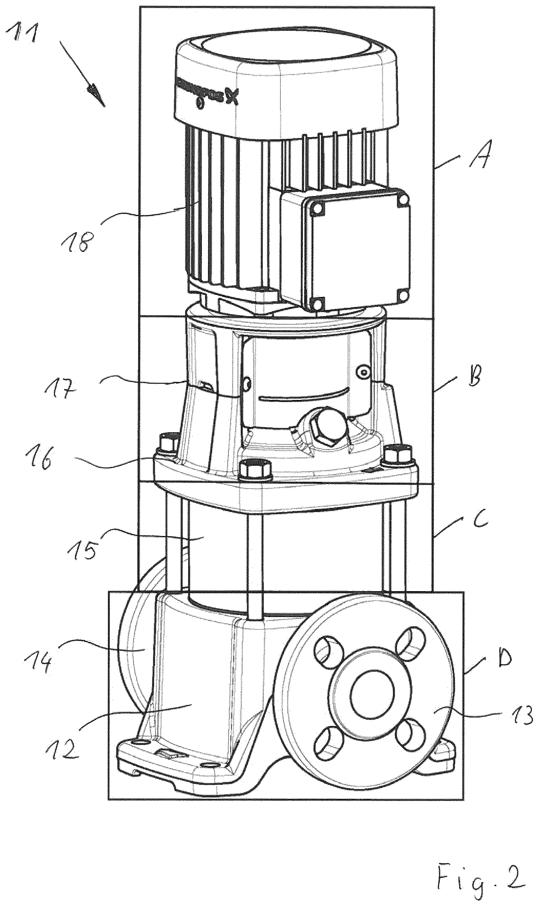

Wie dies im Einzelnen abläuft ist anhand eines Pumpenaggregats 11, welches in Figur 2 dargestellt ist im Folgenden anhand des Ablaufdiagramms gemäß Figur 6 erläutert.

Bei dem Pumpenaggregat gemäß Figur 2 handelt es sich um eine mehrstufige Kreiselpumpe der Inline-Bauart mit vertikaler Wellenanordnung, wie sie von der Anmelderin unter der Typenbezeichnung CR in unterschiedlichen Baugrößen vertrieben wird. Dieses Pumpenaggregat 11 weist einen Pumpenfuß 12 auf, welcher das gesamte Aggregat trägt und auf dem Boden aufsteht. Im Fuß 12 ist ein Eingangsleitungsanschluss 13 sowie ein Ausgangsleitungsanschluss 14 eingegliedert.

An den Pumpenfuß 12 schließt sich nach oben ein im Wesentlichen zylindrischer Pumpenteil 15 an, welcher die Pumpenstufen aufnimmt und der von einem Pumpenkopf 16 nach oben hin abgeschlossen wird, der als Motorstuhl 17 ausgebildet ist und an seiner Oberseite zur Aufnahme eines Elektromotors 18 ausgebildet ist. Der die Pumpenstufen aufweisende zylindrische Pumpenteil 15 ist zwischen Pumpenkopf 16 und Pumpenfuß 12 durch Zuganker eingespannt. Innerhalb dieses Pumpenteils 15 ist eine Welle drehbar gelagert, welche die (nicht dargestellten) Kreiselräder der Pumpenstufen aufnimmt und deren oberes Ende dichtend durch den Pumpenkopf 16 hindurchgeführt ist wo dieses mit einer Kupplung, welche im Bereich des Motorstuhls 17 angeordnet ist, mit dem nach unten weisenden Ende einer Welle des Elektromotors 18 antriebsverbunden ist. Ein solches Pumpenaggregat ist für die Zustandsanalyse mit dem erfindungsgemäßen Verfahren beispielhaft in vier Bereiche A, B, C und D unterteilt, wobei der Bereich A den Elektromotor 18 umfasst, der Bereich B den Motorstuhl 17, der Bereich C den zylindrischen Pumpenteil 15 mit den darin befindlichen Pumpenstufen und der Teil D den Pumpenfuß 12 mit den Leitungsanschlüssen 13 und 14. Es wird nun im Folgenden anhand dieses Pumpenaggregats 11 beispielhaft das erfindungsgemäße Verfahren zur Zustandserfassung des Pumpenaggregats 11 bzw. eines Teils davon erläutert werden:

Es wird zunächst die entsprechende Softwareapplikation auf dem Smartphone 8 gestartet, welche den Benutzer 7 in einem ersten Schritt 20 auffordert das Pumpenaggregat 11 einzuschalten bzw. zu bestätigen, dass das Pumpenaggregat 11 läuft. Sobald dies bedienerseitig bestätigt ist erfolgt eine Abfrage 21, in welcher der Bediener 7 angeben kann, ob eine automatische Erkennung des Pumpenaggregats mittels des Smartphones oder eine manuelle Eingabe erfolgen soll. Nach manueller Eingabe 22 des Pumpenaggregattyps, beispielsweise durch Angabe der Seriennummer, kommuniziert das Smartphone 8 über das Netzwerk mit der cloudbasierten Datenbank zur Identifizierung des Pumpenaggregats und fordert dann den Nutzer 7 auf, einen Bereich des Pumpenaggregats 11 anzugeben, dessen Zustand untersucht werden soll. Der Bediener 7 kann nun zwischen den Bereichen A bis D wählen und wird nach Auswahl einer dieser Bereiche aufgefordert, eine Videosequenz dieses Bereichs von dem laufenden Pumpenaggregat anzufertigen. Dieser Schritt ist im Diagramm gemäß Figur 6 mit 23 gekennzeichnet.

Wenn sich der Bediener 7 bei der Abfrage 21 für die automatische Erkennung entscheidet, wird er mittels der Softwareapplikation in einem Schritt 25 aufgefordert, ein Bild oder eine Videosequenz des gesamten Pumpenaggregats 11 oder eines Teils davon, also eines der Bereiche A bis D mit Hilfe seines Smartphones 8 zu erstellen, welche dann über eine datenbankgestützte Bilderkennung netzwerkseitig ausgewertet und das Ergebnis an das Smartphone 8 übermittelt wird. Wenn das gesamte Pumpenaggregat 11 mittels des Smartphones 8 fotografisch erfasst worden ist, sei es als Einzelfoto oder kurze Videosequenz, dann werden dem Bediener 7 auf dem Display die Bereiche A bis D des Pumpenaggregats 11 angezeigt um auszuwählen, welcher dieser Bereiche A bis D untersucht werden soll. Nach Auswahl des entsprechenden Bereichs wird der Bediener 7 analog wie im Schritt 23 nun im Schritt 25 aufgefordert, eine Videosequenz dieses Teils A, B, C oder D des Pumpenaggregats 11 anzufertigen. Wenn der Bediener 7 bei der automatischen Erkennung bereits nur einen Teil A, B, C oder D des Pumpenaggregats 11 angegeben hat, dann kann bei entsprechender Identifizierung von Pumpenaggregat 11 und einem der Bereiche A bis D die Bereichsauswahl entfallen.

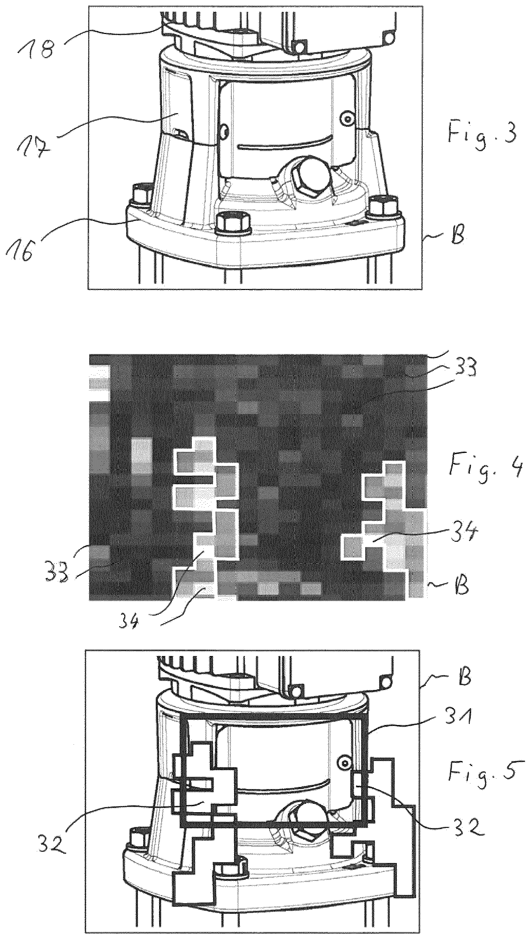

Der Bediener 7 wird nun aufgefordert von dem zu untersuchenden Bereich, der zuvor mit B ausgewählt worden ist, eine Videosequenz vorbestimmter Länge, z. B. 5 bis 10 Sekunden anzufertigen. Diese vom Smartphone 8 aufgenommene Videosequenz des Bereichs B (entsprechend Figur 3) des Pumpenaggregats 11, erfasst den den Motorstuhl 17 umfassenden Bereich, in welchem die Enden von Motorwelle und Pumpenwelle mittels einer Kupplung antriebsverbunden sind. Diese Videosequenz wird in einem Schritt 26 mittels des Smartphones 8 und des internetbasierten Netzwerks an den Server übermittelt. Der Server übermittelt dann unter Verwendung der in der Datenbank zu diesem Pumpenaggregattyp und dem ausgewählten Bereich gespeicherten Daten, die hier auftretenden Frequenzbereiche, sowie die in diesem Bereich bereichsabhängigen maximal zulässigen Geschwindigkeiten für Änderungen. In diesem Schritt 27 wird somit die an den Server übermittelte Videosequenz durch geeignete digitale Bildverarbeitung zunächst in der Datenmenge reduziert um dann in einem Schritt 28 eine Karte über die Geschwindigkeitsverteilung erstellt. Diese Karte ist in Figur 4 dargestellt und umfasst Gruppen von Pixeln, welchen der gleiche Grauwert zugeordnet ist. Jeder Grauwert steht für eine mittlere Geschwindigkeitsänderung dieser Pixelgruppen. Das heißt dort, wo in Figur 4 schwarze Felder 33 sind, ist die Geschwindigkeit der Änderung am geringsten, wohingegen weiße Felder 34 die Bildteile repräsentieren, wo die Geschwindigkeit der Änderung zwischen den Bildern am höchsten ist, d. h. wo zwischen aufeinanderfolgenden Bilder der Videosequenz der größte optische Fluss ermittelt werden konnte und damit die größte Bewegungsamplitude an der Oberfläche in dem Bereich B (entsprechend Figur 3) des Pumpenaggregats 11.

Dieser Schritt 27, in welchem durch die digitale Bildverarbeitung die Videosequenz so aufbereitet wird, dass im Schritt 28 die Karte gemäß Figur 4 erstellt werden kann, erfolgt beispielsweise dadurch, dass das die Videosequenz repräsentierende Signal - sofern noch nicht geschehen - in ein YUV-Signal umgewandelt wird, bei dem das Luminanzsignal Y nach gegebenenfalls erforderlicher Verstärkung zur weiteren Analyse verwendet wird. Die Bilder der Videosequenz werden dann durch Anwendung der Gauss-Pyramide oder der Gauss-Laplace-Pyramide in der Pixelauflösung reduziert, des Weiteren erfolgt eine Bandpassfilterung der Videosequenz, also aller Einzelbilder, um eine weitere Datenreduktion zu erreichen, insbesondere die hier nicht interessierenden Frequenzbereiche auszuschalten. Diese nicht interessierenden Frequenzbereiche, welche z. B. durch Low-Pass Filterungen ausgeschaltet werden, sind datenbankmäßig festgelegt, und werden somit anhand der Datenbank unter Zugrundelegung des ermittelten Pumpentyps sowie des zu untersuchenden Bereichs festgelegt. Schließlich erfolgt die Ermittlung des optischen Flusses zwischen den Einzelbildern, beispielsweise mittels der Lucas-Kanade-Methode um damit die Bestimmung der Geschwindigkeit der Änderungen zwischen den Bildem zu erhalten, sodass schließlich im Schritt 28 die Karte erstellt wird, deren Grauwerte Geschwindigkeiten des optischen Flusses und somit Geschwindigkeiten der Änderungen zwischen Einzelbildern repräsentieren.

In einem Schritt 29 werden dann den Grauwertfeldern 33, 34 der Karte 28 unter Berücksichtigung der Belichtungszeit der Einzelbilder und des zeitlichen Abstandes der Einzelbilder tatsächliche Geschwindigkeiten zugeordnet und somit ermittelt, welche Bereiche mit welcher Frequenz und Amplitude schwingen. Es werden dann die ermittelten Geschwindigkeiten mit den datenbankmäßig hinterlegten zulässigen Geschwindigkeiten dieses Bereichs B in einem Schritt 30 verglichen und dann an das Smartphone 8 übermittelt, welches auf dem Display 9 eine Ansicht entsprechend Figur 5 anzeigt, welcher Bereich 31 der Karte 28 für die Zustandserfassung überhaupt von Relevanz ist und in diesem Bereich 31 die Bereiche 32 angezeigt sind, in welchen die erfassten Schwingungen einen zulässigen Wert überschreiten.

Schließlich werden in einem Schritt 33 nach Analyse des Fehlerzustandes, wie er anhand von Figur 5 dargestellt ist, dem Bediener auf dem Display 9 ein oder mehrere Hinweise gegeben, was zu tun ist, um diese unzulässig hohen Schwingungen zu verringern. Der Hinweis kann beispielsweise lauten, die Drehzahl der Pumpe abzusenken oder zu erhöhen, er kann jedoch auf einen sich langfristig ankündigenden Lagerschaden hinweisen.

Zwar ist grundsätzlich nach Übermittlung der Videosequenz im Schritt 26 eine Signalprüfung dahingehend vorgesehen, ob das Signal zur Auswertung geeignet ist, d.h. ob die Videosequenz ausreichend lang ist, alle Bilder den interessierenden Bildbereich umfassen und ausreichend scharf sind, es kann jedoch auch im Zuge der digitalen Bildverarbeitung sich herausstellen, dass die Auswertung des Videosignals keine eindeutigen Ergebnisse liefert. Dann kann der Bediener durch die Applikation auf dem Smartphone aufgefordert werden, nochmals eine Videosequenz aufzunehmen und zu übermitteln, sodass das Verfahren bei Schritt 26 erneut gestartet und wiederholt wird.

### Bezugszeichenliste

- 1: Pumpenaggregat
- 2: Kreiselpumpe
- 3: Elektromotor
- 4: Steuerung
- 5: Saugleitung
- 6: Druckleitung
- 7: Bediener, Bedienperson
- 8: Smartphone
- 9: Display von 8
- 10: ausgewählter Bereich
- 11: Pumpenaggregat gemäß Figur 2
- 12: Pumpenfuß
- 13: Eingangsleitungsanschluss
- 14: Ausgangsleistungsanschluss
- 15: zylindrischer Pumpenteil
- 16: Pumpenkopf
- 17: Motorstuhl
- 18: Elektromotor
- 20: 1. Schritt im Ablaufdiagramm gemäß Figur 6
- 21: Abfrage
- 22: manuelle Eingabe
- 23: Auswahl und Aufforderung zur Erzeugung einer Videosequenz des ausgewählten Bereichs
- 24: Weiterleitung zur automatischen Erkennung
- 25: Automatische Erkennung, Auswahl des Bereichs und Aufforderung zur Erzeugung einer Videosequenz
- 26: Übermittlung der Videosequenz an einen Server
- 27: digitale Bildverarbeitung
- 28: Erstellung einer den optischen Fluss bzw. die Geschwindigkeit der Änderung angebende Karte
- 29: Geschwindigkeitszuordnung
- 30: Anzeige der kritischen Zustandbereiche
- 31: zulässiger Bereich der Auswertung
- 32: Bereiche innerhalb des Bereichs 31, in denen die zulässige Geschwindigkeit überschritten ist
- 33: schwarze Felder in der Karte
- 34: weiße Felder in der Karte

## Patentansprüche

1. Verfahren zum Erfassen eines Zustandes eines Pumpenaggregats oder Pumpenaggregatteils mit folgenden Verfahrensschritten:
a) Aufzeichnen einer Videosequenz von dem in Betrieb befindlichen Pumpenaggregat oder zumindest eines Teils davon, und
b) Ermitteln des Zustandes des Pumpenaggregats oder eines Teils davon anhand von Änderungen in Bildern der Videosequenz,
**dadurch gekennzeichnet, dass** die Geschwindigkeiten von Veränderungen zwischen Pixeln und Pixelgruppen aufeinanderfolgender Bilder der Videosequenz ermittelt werden und die Ermittlung des Zustandes des Pumpenaggregats anhand der ermittelten Geschwindigkeiten von Änderungen erfolgt.

2. Verfahren nach Anspruch 1, **dadurch gekennzeichnet, dass** die Änderungen durch digitale Bildverarbeitung von Bildern der Videosequenz ermittelt werden.

3. Verfahren nach Anspruch 1 oder 2, dadurch gekennzechnet, dass Pixel oder Pixelgruppen entsprechend ihrer ermittelten Geschwindigkeiten von Änderungen gruppiert und gruppenweise räumlich zugeordnet werden.

4. Verfahren nach einem der vorhergehenden Ansprüche, **dadurch gekennzeichnet, dass** ermittelte Geschwindigkeiten von Änderungen und deren räumliche Zuordnung anhand einer vorzugsweise cloudbasierten Datenbank mit in der Datenbank gespeicherten Werten verglichen und anhand des Vergleichs der Zustand bestimmt wird.

5. Verfahren nach einem der vorhergehenden Ansprüche, **dadurch gekennzeichnet, dass** anhand des Vergleichs ermittelt wird, ob und wo vorbestimmte Geschwindigkeitswerte überschritten und vorzugsweise auf einem Display angezeigt werden.

6. Verfahren nach einem der vorhergehenden Ansprüche, **dadurch gekennzeichnet, dass** das Aufzeichnen der Videosequenz und Übermitteln der aufgezeichneten Daten an einen vorzugsweise cloudbasierten Datenbankserver mittels eines mobilen Computers, insbesondere eines Smartphones oder Tabletcomputers und unter Verwendung einer entsprechenden Softwareapplikation erfolgt, auf welchen auch die Zustandsanzeige erfolgt.

7. Verfahren nach einem der vorhergehenden Ansprüche, **dadurch gekennzeichnet, dass** die Ermittlung der Geschwindigkeiten, deren räumliche Zuordnung und deren datenbankorientierte Auswertung durch digitale Bildverarbeitungsalgorithmen auf dem externen Server und/oder auf dem mobilen Computer erfolgen.

8. Verfahren nach einem der vorhergehenden Ansprüche, **dadurch gekennzeichnet, dass** vor oder während des Aufzeichnens der Videosequenz mindestens ein Bild des Pumpenaggregats oder eines zu analysierenden Bereiches des Pumpenaggregats aufgenommen und datenbankseitig zur Ermittlung des Pumpenaggregattyps verwendet wird, indem ein Vergleich mit datenbankmäßig erfassten Bilddaten erfolgt.

9. Verfahren nach einem der vorhergehenden Ansprüche, **dadurch gekennzeichnet, dass** vor dem Aufzeichnen der Videosequenz der Pumpenaggregattyp und/oder ein zu analysierender Bereich des Pumpenaggregats mittels des mobilen Computers eingegeben wird.

10. Verfahren nach einem der vorhergehenden Ansprüche, **dadurch gekennzeichnet, dass** nach Feststellung des Pumpenaggregattyps und/oder des zu analysierendes Bereichs eines Pumpentyps datenbankseitig die vorbestimmten Geschwindigkeiten und Frequenzfilter für die Bildverarbeitung ermittelt werden.

11. Verfahren nach einem der vorhergehenden Ansprüche, **dadurch gekennzeichnet, dass** eine digitale Bildverarbeitung der Bilder der Videosequenz mit einem oder mehreren der folgenden Schritte erfolgt:
- die Videosequenz wird in ein YUV-Signal umgewandelt, bei dem das Luminanzsignal Y zur weiteren Analyse verwendet wird,
- Anwenden der Gauß-Pyramide oder der Gauß-Laplace-Pyramide auf die zur Analyse verwendeten Einzelbilder
- Bandpassfilterung der Einzelbilder/der Videosequenz nach der Datenreduktion
- Ermitteln des optischen Flusses vorzugsweise mittels der Lucas-Kanade-Methode und Bestimmen der Geschwindigkeit der Änderungen
- Erstellen eines Bildes des Pumpenaggregates oder des zu analysierenden Bereiches entsprechend der ermittelten Geschwindigkeiten unter Berücksichtigung ihrer räumlichen Zuordnung
- anzeige der Bildbereiche, in welchen die vorbestimmte Geschwindigkeit überschritten werden.

12. Verfahren nach einem der vorhergehenden Ansprüche, **dadurch gekennzeichnet, dass** die Videosequenz zunächst hinsichtlich der räumlichen Übereinstimmung ihrer Bilder untersucht wird und bei mangelnder Übereinstimmung ein Signal zur Wiederholung der Aufnahme der Videosequenz auf dem mobilen Computer abgegeben wird.

13. Verfahren nach einem der vorhergehenden Ansprüche, **dadurch gekennzeichnet, dass** nach erfolgter Zustandserfassung und Ermittlung mindestens eines Bereichs, in dem die vorbestimmte Geschwindigkeit der Änderung überschritten ist, ein datenbankgestütztes Signal zu einer geänderten Einstellung des Pumpenaggregats und/oder Ersatz von Bauteilen gegeben wird.

14. Verfahren nach einem der vorhergehenden Ansprüche, **dadurch gekennzeichnet, dass** während der Videoaufnahme auch der Ton aufgenommen wird und zusätzlich eine Ermittlung des Zustandes des Pumpenaggregates durch Auswertung der Tonsequenz erfolgt.

15. Verfahren nach einem der vorhergehenden Ansprüche, **dadurch gekennzeichnet, dass** in zeitlichen Abständen wiederholt wird um die Zustandsänderungen des Pumpenaggregats zu erfassen.

## Claims

1. A method for detecting a condition of a pump assembly or a pump assembly part, with the following method steps:
a) recording a video sequence of the pump assembly which is in operation, or at least a part thereof, and
b) determining the condition of the pump assembly or a part thereof, by means of changes in pictures of the video sequence,
**characterised in that** the speed of changes between pixels or pixel groups of successive pictures of the video sequence are determined, and the determining of the condition of the pump assembly is effected on the basis of the determined speeds of changes.

2. A method according to claim 1, **characterised in that** the changes are determined by means of the digital picture processing of pictures of the video sequence.

3. A method according to claim 1 or 2, **characterised in that** the pixels or pixel groups are grouped or spatially assigned in a grouped manner, in accordance with their determined speeds of changes.

4. A method according to one of the preceding claims, **characterised in that** determined speeds of changes and their spatial assignment are compared to values stored in a preferably cloud-based data base, by means of the data base, and the condition is determined on the basis of the comparison.

5. A method according to one of the preceding claims, **characterised in that** on the basis of the comparison, it is determined whether and where predefined speed values are exceeded and such are preferably displayed on a display.

6. A method according to one of the preceding claims, **characterised in that** the recording of the video sequence and the transfer of the recorded data to a preferably cloud-based data base server is effected by way of a mobile computer, in particular a smartphone or tablet computer, whilst applying a corresponding software application, on which computer the condition display is also effected.

7. A method according to one of the preceding claims, **characterised in that** the determining of the speeds, their spatial assignment and their data-base-orientated evaluation are effected by way of digital picture processing algorithms on the external server and/or on the mobile computer.

8. A method according to one of the preceding claims, **characterised in that** at least one picture of the pump assembly or of a region of the pump assembly which is to be analysed is taken, and used on the data base side for determining the pump assembly type by way of a comparison with picture data acquired on the data base side being effected, before or during the recording of the video sequence.

9. A method according to one of the preceding claims, **characterised in that** the pump assembly type and/or region of the pump assembly which is to be analysed is inputted by way of the mobile computer, before the recording to the video sequence.

10. A method according to one of the preceding claims, **characterised in that** the predefined speeds and frequency filters for the picture processing are determined on the data base side, after determining the pump assembly type and/or the region of a pump type which is to be analysed.

11. A method according to one of the preceding claims, **characterised in that** a digital picture processing of the pictures of the video sequence is effected with one or more of the following steps:
- the video sequence is converted into a YUV signal, with which the luminance signal Y is used for further analysis,
- applying the Gaussian pyramid or the Gaussian-Laplacian pyramid to the individual pictures used for the analysis,
- band-pass filtering the individual pictures / the video sequence after the data reduction,
- determining optical flux, preferably by way of the Lucas-Kanade method and determining the speed of the changes,
- creating a picture of the pump assembly and of the region to be analysed, in accordance with the determined speeds and whilst taking into account their spatial assignment,
- displaying the picture regions, in which the predefined speeds are exceeded.

12. A method according to one of the preceding claims, **characterised in that** the video sequence is firstly examined with regard to the spatial consistency of its pictures, and a signal for repeating the recording of the video sequence is given to the mobile computer given a lack of consistency.

13. A method according to one of the preceding claims, **characterised in that** a data-base-assisted signal concerning a changed setting of the pump assembly and/or the replacement of components is provided after the effected determining of the condition and the determining of at least one region, in which the predefined speed of the change is exceeded.

14. A method according to one of the preceding claims, **characterised in that** the sound is also recorded during the video recording, and a determining of the condition of the pump assembly is additionally effected by way of evaluating the sound sequence.

15. A method according to one of the preceding claims, **characterised in that** it is repeated in temporal intervals, in order to detect condition changes of the pump assembly.

## Revendications

1. Procédé de détection d'un état d'un groupe de pompage ou d'une partie de groupe de pompage, comprenant les étapes ci-dessous :
a) enregistrement d'une séquence vidéo du groupe de pompage en fonctionnement ou d'au moins une partie de celui-ci, et
b) détermination de l'état du groupe de pompage ou d'une partie de celui-ci en s'appuyant sur des modifications au sein d'images de la séquence vidéo,
**caractérisé en ce que** les vitesses de modifications entre pixels et groupes de pixels d'images successives de la séquence vidéo sont déterminées et la détermination de l'état du groupe de pompage est mise en œuvre en s'appuyant sur les vitesses déterminées de modifications.

2. Procédé selon la revendication 1, **caractérisé en ce que** les modifications sont déterminées par traitement numérique d'images de la séquence vidéo.

3. Procédé selon la revendication 1 ou 2, **caractérisé en ce que** des pixels ou des groupes de pixels sont regroupés en fonction de leurs vitesses déterminées de modifications et sont affectés spatialement par groupes.

4. Procédé selon l'une quelconque des revendications précédentes, **caractérisé en ce que** des vitesses déterminées de modifications et leur affectation spatiale sont comparées, en s'appuyant sur une base de données de manière préférée située en nuage, avec des valeurs stockées dans la base de données et l'état est défini en s'appuyant sur la comparaison.

5. Procédé selon l'une quelconque des revendications précédentes, **caractérisé en ce qu'**il est déterminé à l'aide de la comparaison, si et où des valeurs de vitesse prédéfinies sont dépassées et celles-ci sont de manière préférée indiquées sur un affichage.

6. Procédé selon l'une quelconque des revendications précédentes, **caractérisé en ce que** l'enregistrement de la séquence vidéo et la transmission des données enregistrées à un serveur de base de données de manière préférée situé en nuage sont mis en œuvre au moyen d'un ordinateur mobile, en particulier d'un téléphone multifonctions ou d'une tablette électronique et en utilisant une application logicielle appropriée, sur lesquels un affichage de l'état est également effectué.

7. Procédé selon l'une quelconque des revendications précédentes, **caractérisé en ce que** la détermination des vitesses, leur affectation spatiale et leur évaluation orientée base de données sont mises en œuvre grâce à des algorithmes de traitement numérique d'image sur le serveur externe et/ou sur l'ordinateur mobile.

8. Procédé selon l'une quelconque des revendications précédentes, **caractérisé en ce que**, avant ou pendant l'enregistrement de la séquence vidéo, au moins une image du groupe de pompage ou d'une région à analyser du groupe de pompage est enregistrée et est utilisée relativement à la base de données pour déterminer le type de groupe de pompage en mettant en œuvre une comparaison avec des données d'image enregistrées dans la base de données.

9. Procédé selon l'une quelconque des revendications précédentes, **caractérisé en ce que**, avant l'enregistrement de la séquence vidéo, le type de groupe de pompage et/ou une région à analyser du groupe de pompage est saisi au moyen de l'ordinateur mobile.

10. Procédé selon l'une quelconque des revendications précédentes, **caractérisé en ce que**, après détermination du type de groupe de pompage et/ou de la région à analyser d'un type de pompe, les vitesses et filtres de fréquence prédéfinis sont déterminés dans la base de données, pour le traitement d'image.

11. Procédé selon l'une quelconque des revendications précédentes, **caractérisé en ce qu'**un traitement numérique des images de la séquence vidéo est mis en œuvre avec une ou plusieurs des étapes ci-dessous :
- conversion de la séquence vidéo en un signal YUV, dans lequel le signal de luminance Y est utilisé pour la suite de l'analyse,
- application de la pyramide de Gauss ou de la pyramide de Gauss-Laplace aux images individuelles utilisées pour les analyses
- filtrage passe-bande des images individuelles/de la séquence vidéo après réduction des données
- détermination du flux optique, de manière préférée au moyen de la méthode Lucas-Kanade, et définition de la vitesse des modifications
- création d'une image du groupe de pompage ou de la région à analyser en fonction des vitesses déterminées et en tenant compte de l'affectation spatiale de celles-ci
- indication des régions d'image dans lesquelles la vitesse prédéfinie est dépassée.

12. Procédé selon l'une quelconque des revendications précédentes, **caractérisé en ce que** la séquence vidéo est d'abord examinée quant à la coïncidence spatiale des images de celle-ci et, en cas de coïncidence insuffisante, un signal est émis sur l'ordinateur mobile en vue d'une répétition de l'enregistrement de la séquence vidéo.

13. Procédé selon l'une quelconque des revendications précédentes, **caractérisé en ce que**, après mise en œuvre de la détection d'état et de la détermination d'au moins une région dans laquelle la vitesse prédéfinie de la modification est dépassée, un signal s'appuyant sur la base de données est fourni en vue d'un réglage modifié du groupe de pompage et/ou d'un remplacement de composants.

14. Procédé selon l'une quelconque des revendications précédentes, **caractérisé en ce que** le son est également enregistré pendant l'enregistrement vidéo et une détermination de l'état du groupe de pompage est en outre mise en œuvre grâce à une évaluation de la séquence sonore.

15. Procédé selon l'une quelconque des revendications précédentes, **caractérisé en ce qu'**il est répété à des intervalles temporels afin de détecter les modifications d'état du groupe de pompage.
